# EUROPÄISCHE PATENTANMELDUNG

(11) **EP 1 170 848 A2**
(43) Veröffentlichungstag der Anmeldung: **09.01.2002**
(21) Anmeldenummer: 01113918.5
(22) Anmeldetag: 07.06.2001
(51) Int. Cl.: H02J 13/00

(54) **Gebäudeinstallationssystem und Installationsgerät**

(30) Priorität: 05.07.2000 DE 10032646
(71) Anmelder: ABB PATENT GmbH, 68526 Ladenburg (DE)
(72) Erfinder: Pint, Ulrich, 58099 Hagen (DE); Szkudlarek, Thomas, 45665 Recklinghausen (DE)
(74) Vertreter: Miller, Toivo

(57) **Zusammenfassung**

Die Erfindung bezieht sich auf ein Gebäudeinstallationssystem, bei dem mehrere als Sensoren (1) oder Aktoren (2) wirkende Installationsgeräte (1, 2) an ein Kommunikationssystem (3, 4) angeschlossen sind, wobei die Installationsgeräte (1, 2) jeweils eine Ethernet-Schnittstelleneinrichtung und einen Webseitengenerator aufweisen, und das Kommunikationssystem (3, 4) ein Lokales Netzwerk (3) und/oder das Internet (4) ist. Außerdem bezieht sich die Erfindung auf ein Installationsgerät (2) zur Verwendung in einem Gebäudeinstallationssystem, wobei das Gerät (2) eine direkte Steuerschnittstelle gemäß IEEE 802.3 - Standard enthält.

## Beschreibung

Die Erfindung bezieht sich auf ein Gebäudeinstallationssystem, bei dem mehrere Installationsgeräte an ein Kommunikationssystem angeschlossen sind. Außerdem bezieht sich die Erfindung auf ein Installationsgerät, insbesondere einen Dimmer zur Verwendung in einem solchen Gebäudeinstallationssystem.

Solche Gebäudeinstallationssysteme und darin verwendbare Installationsgeräte sind beispielsweise in "Die Bibliothek der Technik", Bd. 161, "Gebäudesystemtechnik", R. Rosch et al., Verl. Moderne Technik, 1998, beschrieben. Dort ist auf den Seiten 8 bis 10 der Europäische Installationsbus EIB beschrieben, der gesonderte Busleitungen erfordert. Außerdem ist insbesondere auf den Seiten 33 bis 47 ein Powerline-System beschrieben, das eine Verwendung von Niederspannungsleitungen zur Datenübertragung ermöglicht. Diesen Systemen ist gemeinsam, daß ihr Wirkungsbereich auf ein Gebäude oder eine Wohnung begrenzt ist.

Der Erfindung liegt daher die Aufgabe zugrunde, ein Gebäudeinstallationssystem, bzw. ein darin verwendbares Installationsgerät anzugeben, das andere Übertragungswege nutzt und einen größeren Wirkungsbereich ermöglicht.

Diese Aufgabe wird durch ein Gebäudeinstallationssystem gelöst, das die im Anspruch 1 angegebenen Merkmale aufweist. Vorteilhafte Ausgestaltungen und ein zur Verwendung in dem Gebäudeinstallationssystem geeignetes Installationsgerät sind in weiteren Ansprüchen angegeben.

Beim erfindungsgemäßen System bzw. Gerät werden Möglichkeiten genutzt, die die zunehmende Vernetzung von Datenendgeräten im gewerblichen wie privaten Bereich schafft, um die klassische Verdrahtung oder spezielle Bussysteme in der Installationstechnik zu ersetzen. Zahlreiche Funktionen der klassischen Installationstechnik, wie beispielsweise Schalten, Dimmen oder die Jalousiesteuerung lassen sich unter Mitbenutzung einer vorhandenen oder zu errichtenden Netzwerkstruktur eines Gebäudes oder eines Unternehmens ausführen.

Eine weitere Beschreibung der Erfindung und ihrer Vorteile erfolgt nachstehend anhand eines in der Zeichnungsfigur dargestellten Ausführungsbeispiels.

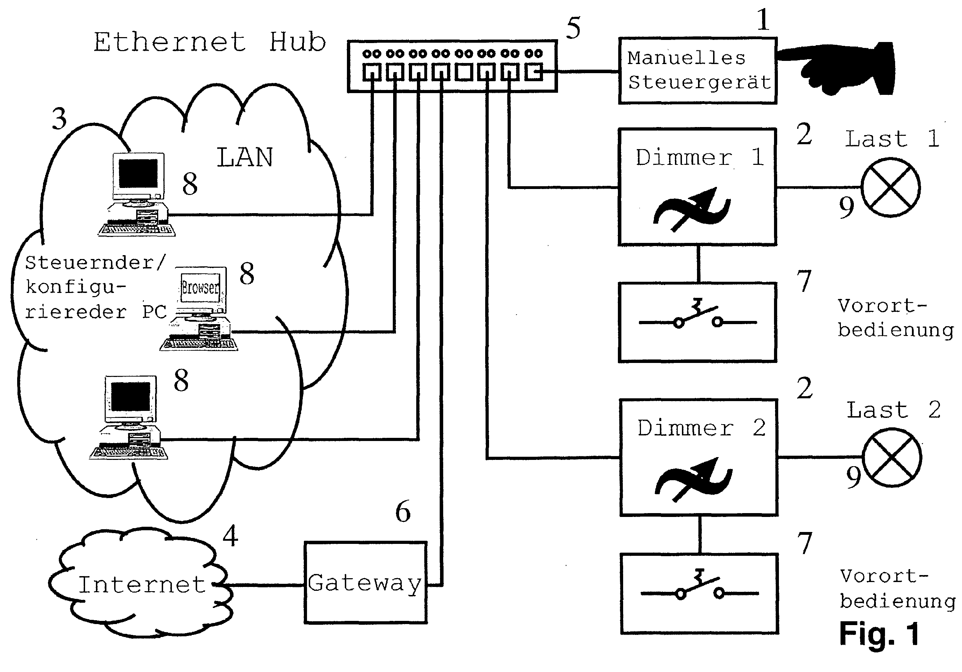

Fig. 1 zeigt schematisiert ein Gebäudeinstallationssystem, bei dem an einen als Ethernet Hub bezeichneten Vermittlungsknoten 5 Installationsgeräte 1, 2 angeschlossen sind, nämlich ein manuelles Steuergerät als Sensor 1, und zwei Dimmer als Aktoren 2, an die jeweils eine Last 9 angeschlossen ist. Außerdem sind im Beispiel drei Stationen oder Rechner 8 eines Lokalen Netzwerks (LAN) 3 angeschlossen, sowie über ein Gateway 6 ein Übergang in das Internet 4 geschaffen. An die Dimmer 2 sind jeweils Vorortbedienungen 7 zur Ansteuerung vor Ort angeschlossen, die auch integriert sein können. Neben Dimmern sind auch andere Aktoren, wie Jalousiesteuerungen oder Schalter einsetzbar.

Es sind Dimmer mit bekanntem technischem Aufbau und bekanntem Laststeuerungsverfahren verwendbar, ergänzt durch eine direkte Ethernet-Steuerschnittstelle gemäß dem IEEE 802.3 - Standard. Bezüglich des Laststeuerverfahrens sind also Dimmer mit Phasenanschnitt- oder Phasenabschnittsteuerung und vorzugsweise Universaldimmer mit automatischer Erkennung der Lastart einsetzbar. Es sind auch alle üblichen Bauformen wie Deckeneinbaugeräte, Reiheneinbaugeräte oder Unterputzgeräte möglich, sowie Dimmer für beliebige Versorgungsspannung, Nennlast und Stellbereich. Die Schnittstelle kann 10Base-T oder 100Base-TX gemäß IEEE 802.3 sein, für das TCP/IP-Protokoll und CSMA/CA als Zugriffsverfahren. Die Dimmer verfügen über einen Webseitengenerator der die Geräteparametrierung und Steuerung erlaubt. Zur Kontaktierung ist eine Anschlußleiste LSA+® , also eine lötfreie, schraubfreie, abisolierfreie Anschlußleiste oder alternativ ein RJ 45-Steckverbinder geeignet; als Kabeltyp: Twisted Pair (S-FTP nach Kat. 5).

Das Gebäudeinstallationssystem ermöglicht die Ansteuerung eines Dimmers für einen beliebigen Helligkeitswert in 64 bis 256 Dimmstufen direkt über die 10Base-T - oder 100Base-TX -Schnittstelle mittels eines Datentelegramms, das im Dimmer ausgewertet und umgesetzt wird. Alternativ kann die Steuerung durch jeden Standard-PC innerhalb des lokalen Netzwerkes 3 oder des Internets 4 erfolgen. Hierbei wird die Stellgrösse über einen beliebigen Web-Browser dem über die IP-Adresse ausgewählten Aktor (Dimmer) mitgeteilt. Nach erfolgter Statusänderung bzw. einer Betätigung des Dimmers vor Ort, wird vom Dimmer die interne Webseite aktualisiert und über die Schnittstelle eine Rückübertragung einer Aktualisierungsmeldung in das Netz 3 veranlaßt, die in wenigstens einem der am Netz 3 angeschlossenen manuellen Steuergeräte 1 oder Rechner 8 empfangen wird. Als Rechner 8 ist hierzu ein Standard-PC verwendbar, der für eine Steuerung von Aktoren 2, und die Parametrierung von Installationsgeräten 1, 2 eingerichtet ist.
Als einheitliches, standardisiertes Inbetriebnahmetool ist im Gebäudeinstallationssystem ein beliebiger Web-Browser verwendbar. Über diesen kann eine Vergabe oder Änderung von IP-Adressen erfolgen, auch eine Anpassung von Funktionsparametern, im Fall eines Dimmers z. B. Dimmgeschwindigkeit, Memoryfunktion EIN/AUS, Startparameter, Lichtszenen oder sonstiger Funktionen des Dimmers.

## Patentansprüche

1. Gebäudeinstallationssystem, bei dem mehrere als Sensoren (1) oder Aktoren (2) wirkende Installationsgeräte (1, 2) an ein Kommunikationssystem (3, 4) angeschlossen sind, **dadurch gekennzeichnet, daß**
a) die Installationsgeräte (1, 2) jeweils eine Ethernet-Schnittstelleneinrichtung aufweisen, und
b) das Kommunikationssystem (3, 4) ein Lokales Netzwerk (3) und/oder das Internet (4) ist.

2. Gebäudeinstallationssystem nach Anspruch 1, **dadurch gekennzeichnet, daß** die Installationsgeräte (1, 2) an einen Vermittlungsknoten (5) angeschlossen sind, an den außerdem mindestens eine Station (8) angeschlossen ist, die für eine Fernsteuerung oder Fernparametrierung der Installationsgeräte (1, 2) eingerichtet ist.

3. Gebäudeinstallationssystem nach Anspruch 2, **dadurch gekennzeichnet, daß** die Verbindung zum Internet (4) mittels eines an den Vermittlungsknoten (5) angeschlossenen Gateways (6) hergestellt ist.

4. Gebäudeinstallationssystem nach einem der vorstehenden Ansprüche, **dadurch gekennzeichnet, daß** wenigstens eines der Installationsgeräte (1, 2) ein Dimmer ist.

5. Gebäudeinstallationssystem nach einem der vorstehenden Ansprüche, **dadurch gekennzeichnet, daß** an wenigstens eines der Installationsgeräte (1, 2) eine Vorortbedienung (7) angeschlossen ist.

6. Installationsgerät (2) zur Verwendung in einem Gebäudeinstallationssystem, **dadurch gekennzeichnet, daß** das Gerät (2) eine direkte Steuerschnittstelle gemäß IEEE 802.3 - Standard enthält.

7. Installationsgerät (2) nach Anspruch 6, **dadurch gekennzeichnet, daß** das Gerät einen Webseitengenerator enthält.

8. Installationsgerät (2) nach Anspruch 6 oder 7, **dadurch gekennzeichnet, daß** das Gerät ein Dimmer zur Steuerung der Helligkeit von Lampen ist.
